# EUROPEAN PATENT SPECIFICATION

(11) **EP 3 058 991 B1**
(45) Date of publication and mention of the grant of the patent: **30.01.2019**
(21) Application number: 14853884.6
(22) Date of filing: 27.05.2014
(51) Int. Cl.: A62B 23/02, A62B 9/04, A62B 18/02, A41D 13/11, B29C 45/14, B29L 31/00

(54) **GENERAL-PURPOSE SYNTHETIC RESIN MASK USING VELCRO INSERTING-TYPE FILTER EXCHANGE MODE, AND INJECTION MOLDING DEVICE AND MANUFACTURING METHOD THEREFOR**
ALLZWECK-KUNSTHARZMASKE MIT VELCRO-EINSATZ-FILTERAUSTAUSCHMODUS SOWIE GUSSFORMVORRICHTUNG UND HERSTELLUNGSVERFAHREN DAFÜR
MASQUE DE RÉSINE SYNTHÉTIQUE A USAGE GÉNÉRAL UTILISANT UN MODE D'ÉCHANGE DE FILTRE DU TYPE À INTRODUCTION DE VELCRO, ET DISPOSITIF DE MOULAGE PAR INJECTION ET SON PROCÉDÉ DE FABRICATION

(30) Priority: 17.10.2013 KR 20130123798
(43) Date of publication of application: 24.08.2016
(73) Proprietor: In Tech Co., Ltd, Gimje-si, Jeollabuk-do 576-924 (KR)
(72) Inventor: LEE, Chang Sun, Jeongeup-si Jeollabuk-do 580-853 (KR)
(74) Representative: reuteler & cie SA
(86) International application number: PCT/KR2014/004743
(87) International publication number: WO 2015/056859

(56) References cited:
- JP-A- H11 104 255
- KR-A- 20100 051 052
- KR-A- 20100 071 076
- KR-A- 20100 098 502
- KR-A- 20120 055 443
- US-A- 4 802 939
- US-A- 5 540 970
- US-A- 5 603 317
- US-A1- 2012 167 891

## Description

### Field of the Invention

The present invention relates to a velcro inserting type universal synthetic resin mask with a replaceable filter, an injection molding apparatus therefor, and a manufacturing method thereof and, more specifically, to a velcro inserting type universal synthetic resin mask with a replaceable filter which greatly reduces manufacturing time by using a one-stop injection molding using a mold, and increases a hygiene level by replacing filters, an injection molding apparatus therefor, and a manufacturing method thereof. The term "velcro" is used throughout this specification in place of a generic term "hook and loop fastener".

### Description of the Related Art

Conventionally, masks are worn on a face in order to prevent harmful matters generated in a contaminated area, at various emergency situations, in an industrial field where air can be contaminated, etc. from permeating into a human body, or are used to block viruses, etc. from being introduced from outside through respiratory organs.

These masks are normally arranged such that sanitated cotton or fabric serves as a filter during respiration, thereby preventing infiltration of dusts, foreign matters, various germs, etc..

In general, masks which are worn to prevent a direct contact to external air when respiratory diseases such as coughs or influenza, etc. break out or when a wearer works in a place where much dust or bad smell prevails are composed of a rectangular front cover fabric cloth for covering a nose or a mouth of the wearer and connecting laces which are coupled with both sides of the cover fabric and worn on both ears to suspend the cover fabric.

Since the rectangular fabric are worn on both ears according to the conventional mask, the conventional masks are manufactured by forming the rectangular fabric first, forming a holding portion for holding the fabric on both ears separately from the fabric, and attaching the holding portion to the fabric. Therefore, the manufacturing process is complicate which requires long manufacturing time.

Also, the mask manufactured by the conventional method is hard to be reused after being stored, and it has weak filtering function as it simply uses a fabric to perform the filtering. Furthermore, diversity of the manufactured product is relatively weak.

### DOCUMENT OF RELATED ART

1. "REUSABLE FACIAL MASSAGING MASK" (Korea Patent Application No. 10-2004-0000776)
2."FUNCTIONAL HYGIENE MASK PROTECTING RESPIRATORY ORGANS AND PROTECTING CONTAGIOUS DISEASES" (Korea Patent Application No. 10-2003-0028361)

JPH11104255 discloses a velcro inserting type mask with a replaceable filter.

### DISCLOSURE OF THE INVENTION

### TECHNICAL PROBLEM

The present invention is devised to solve the aforementioned problems, and an objective of the present invention is to provide a velcro inserting type universal synthetic resin mask with a replaceable filter which greatly reduces manufacturing time by using a one-stop injection molding using a mold, and increases a hygiene level by replacing filters, an injection molding apparatus therefor, and a manufacturing method thereof.

Also, an objective of the present invention is to provide a velcro inserting type universal synthetic resin mask with a replaceable filter which raises a hygiene level by replacing filters, provides a long-term storage after the filter is removed, and enabling reuse of the filter, an injection molding apparatus therefor, and a manufacturing method thereof.

Also, an objective of the present invention is to provide a velcro inserting type universal synthetic resin mask with a replaceable filter which improves a filtering function by designing a replaceable filter and a filter insertion portion therefor, and which can be manufactured in various shapes, an injection molding apparatus therefor, and a manufacturing method thereof.

Also, an objective of the present invention is to provide a velcro inserting type universal synthetic resin mask with a replaceable filter which improves a filtering function by designing a replaceable filter and a filter insertion portion therefor, and which can be manufactured in various shapes, an injection molding apparatus therefor, and a manufacturing method thereof.

However, it should be noted that the objectives of the present invention are not restricted to the aforementioned objects, and other objects which are not mentioned above can be readily understood by a person having ordinary skill in the art from the description as follows.

### TECHNICAL SOLUTION

In order to accomplish the aforementioned objectives, the velcro inserting type universal synthetic resin mask with a replaceable filter according to an embodiment of the present invention comprises: a mask guide with a rim-like shape which supports a filter insertion portion therein and is formed of a synthetic resin by an injection molding process using an upper mold and a lower mold along with the filter insertion portion; and a velcro for attachment of a filter which is placed at a front portion of a velcro entity for attachment of a filter forming portion of the lower mold during the injection molding process for the mask guide and the filter insertion portion and formed on the mask guide when inserted such that the velcro for attachment of a filter is fixed through a velcro entity insertion hole forming portions of the upper mold.

In order to accomplish the aforementioned objectives, an injection molding apparatus for a velcro inserting type universal synthetic resin mask with a replaceable filter according to an embodiment of the present invention characterized comprises: a lower mold which is engraved to form a lower side of a mask guide which constitutes the velcro inserting type universal synthetic resin mask with a replaceable filter, wherein the lower mold includes a lower mask guide forming portion including four separate velcro entity for attachment of a filter forming portions for placing a velcro for attachment of a filter on a lower surface of the mask guide, wherein the velcro entity for attachment of a filter forming portions are arranged in top-down and bilateral symmetry; and an upper mold which is engraved to form an upper side of the mask guide, wherein the upper mold includes an upper mask guide forming portion including four separate velcro entity insertion hole forming portions for fixing the velcro for attachment of a filter on a lower surface of the mask guide, wherein the velcro entity insertion hole forming portions are arranged in top-down and bilateral symmetry.

In order to accomplish the aforementioned objectives, a method of manufacturing a velcro inserting type universal synthetic resin mask with a replaceable filter according to an embodiment of the present invention comprises: a first step in which lower mold including a velcro entity for attachment of a filter forming portion and an upper mold including a velcro entity insertion hole forming portion are formed; a second step in which inserting of the velcro for attachment of a filter is performed on the velcro entity for attachment of a filter forming portion of the lower mold, by placing it at a front portion of said velcro entity for attachment of a filter forming portion; a third step in which a synthetic resin for forming a mask guide and a filter insertion portion is stirred and supplied to a hopper; and a fourth step in which a high pressure injection process of the synthetic resin, which is molted in a heating cylinder, is performed between the lower mold and the upper mold by way of a screw such that manufacturing of the velcro inserting type universal synthetic resin mask with a replaceable filter is completed.

### ADVANTAGEOUS EFFECTS

By using the velcro inserting type universal synthetic resin mask with a replaceable filter, the injection molding apparatus therefor, and the manufacturing method thereof according to embodiments of the present invention, the manufacturing time can be greatly reduced by using an one-stop injection molding process using a mold.

Also, by using the velcro inserting type universal synthetic resin mask with a replaceable filter, the injection molding apparatus therefor, and the manufacturing method thereof according to embodiments of the present invention, a hygiene level can be raised by replacing filters and the filter can be stored for a long period of time, which provides an effect of reusing the filter after a long time storage.

Also, by using the velcro inserting type universal synthetic resin mask with a replaceable filter, the injection molding apparatus therefor, and the manufacturing method thereof according to embodiments of the present invention, replaceable filters and a filter insertion portion therefore are designed, which enhances a filtering function and enables the masks to be manufactured in various shapes.

### BRIEF DESCRIPTION OF THE DRAWINGS

FIG. 1 is a diagram illustrating a velcro inserting type universal synthetic resin mask with a replaceable filter 1a which is formed as a first type according to an embodiment of the present invention.
FIG. 2 is a diagram illustrating a velcro inserting type universal synthetic resin mask with a replaceable filter 1b which is formed as a second type according to an embodiment of the present invention.
FIG. 3 is a diagram illustrating a velcro inserting type universal synthetic resin mask with a replaceable filter 1c which is formed as a third type according to an embodiment of the present invention.
FIG. 4 is a diagram illustrating a velcro inserting type universal synthetic resin mask with a replaceable filter 1d which is formed as a fourth type according to an embodiment of the present invention.
FIG. 5 is a diagram illustrating a velcro inserting type universal synthetic resin mask with a replaceable filter 1e which is formed as a fifth type according to an embodiment of the present invention.
FIG. 6 is a diagram illustrating a velcro inserting type universal synthetic resin mask with a replaceable filter 1f which is formed as a sixth type according to an embodiment of the present invention.
FIGs. 7 and 8 are diagrams illustrating an injection molding apparatus for the velcro inserting type universal synthetic resin mask with a replaceable filter according to an embodiment of the present invention.
FIG. 9 is a flow chart illustrating a method of manufacturing the velcro inserting type universal synthetic resin mask with a replaceable filter according to an embodiment of the present invention.
FIG. 10 is a diagram illustrating structures of a first stirrer and a second stirrer which are used for manufacturing the velcro inserting type universal synthetic resin mask with a replaceable filter according to an embodiment of the present invention.

### BEST MODE FOR CARRYING OUT THE INVENTION

A velcro inserting type universal synthetic resin mask with a replaceable filter characterized in comprising:
mask guide with a rim-like shape which supports a filter insertion portion therein and is formed of a synthetic resin by an injection molding process using an upper mold and a lower mold along with the filter insertion portion; and
a velcro for attachment of a filter which is placed at a front portion of a velcro entity for attachment of a filter forming portion of the upper mold during the injection molding process for the mask guide and the filter insertion portion and formed on the mask guide when inserted such that the velcro for attachment of a filter is fixed through a velcro entity insertion hole of the upper mold.

An injection molding apparatus for a velcro inserting type universal synthetic resin mask with a replaceable filter characterized in comprising:
a lower mold which is engraved to form a lower side of a mask guide which constitutes the velcro inserting type universal synthetic resin mask with a replaceable filter, wherein the lower mold includes a lower mask guide forming portion including four separate velcro entity for attachment of a filter forming portions for placing a velcro for attachment of a filter on a lower surface of the mask guide, wherein the velcro entity for attachment of a filter forming portions are arranged in top-down and bilateral symmetry; and
an upper mold which is engraved to form an upper side of the mask guide, wherein the upper mold includes an upper mask guide forming portion including four separate velcro entity insertion hole forming portions for fixing the velcro for attachment of a filter on a lower surface of the mask guide, wherein the velcro entity insertion hole forming portions are arranged in top-down and bilateral symmetry.

A method of manufacturing a velcro inserting type universal synthetic resin mask with a replaceable filter is characterized in comprising:
a first step in which lower mold including a velcro entity for attachment of a filter forming portion and an upper mold including a velcro entity insertion hole forming portion are formed;
a second step in which inserting of the velcro for attachment of a filter is performed on the velcro entity for attachment of a filter forming portion of the lower mold, by placing it at a front portion of said velcro entity for attachment of a filter forming portion;
a third step in which a synthetic resin for forming a mask guide and a filter insertion portion is stirred and supplied to a hopper; and
a fourth step in which a high pressure injection process of the synthetic resin, which is molted in a heating cylinder, is performed between the lower mold and the upper mold by way of a screw such that manufacturing of the velcro inserting type universal synthetic resin mask with a replaceable filter is completed.

### MODE FOR CARRYING OUT THE INVENTION

In the following, detailed explanations on preferred embodiments of the present invention will be provided by referring to the appended figures. In the explanation on the present invention in the following, detailed explanations on a related known function or a configuration will be omitted when it is determined that they will unnecessarily obscure the subject matter of the present invention.

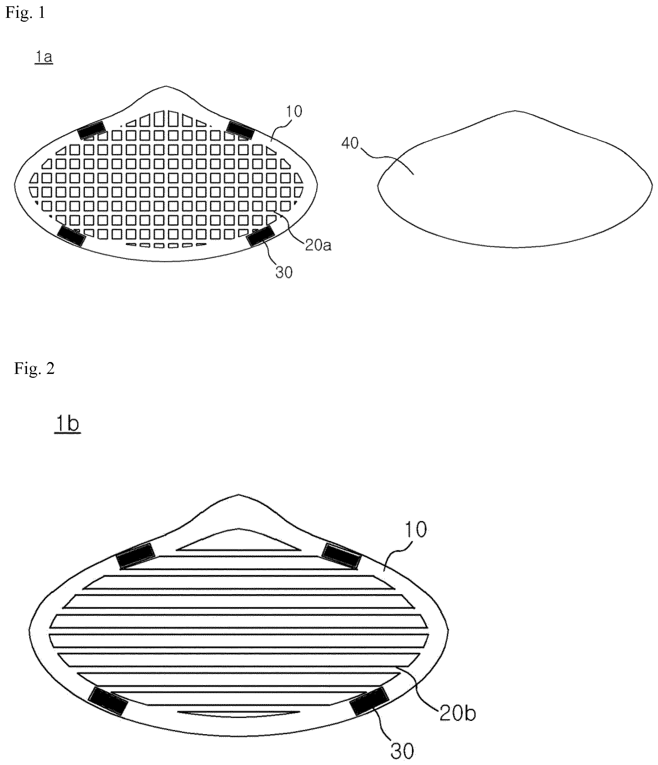

FIG. 1 is a diagram illustrating a velcro inserting type universal synthetic resin mask with a replaceable filter 1a which is formed as a first type according to an embodiment of the present invention. The velcro inserting type universal synthetic resin mask with a replaceable filter 1a, which is made as the first type, includes a mask guide 10, a first type filter insertion portion 20a, a velcro for attachment of a filter 30, and a replaceable filter 40.

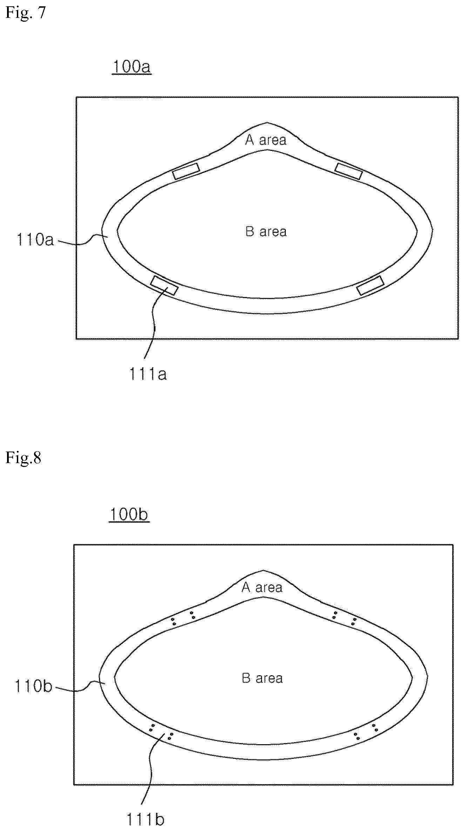

At first, the mask guide 10 has a rim-like shape and supports the first type filter insertion portion 20a therein. The mask guide 10 is formed of a synthetic resin in one entity with the first type filter insertion portion 20a by using an injection molding method using an upper mold (100b, refer to FIG. 8) and a lower mold (100a, refer to FIG. 7).

And, the first type filter insertion portion 20a is formed such that grid patterned rectangular holes are arranged in an inner circumferential surface of the mask guide 10. Here, as shown in FIG. 1, in the first type filter insertion portion 20a, triangular shaped or trapezoidal shaped holes can be arranged in a region adjacent to the mask guide 10 due to the shape of the inner surface of the mask guide 10.

During the injection molding process with respect to the mask guide 10 and the first type filter insertion portion 20a, the velcro for attachment of a filter 30 is placed in front of a velcro entity for attachment of a filter forming portion 111a of the lower mold 100a, and inserted to be fixed on the mask guide 10 through a velcro entity insertion hole forming portion (111b, refer to FIG. 8) of the upper mold 100b. That is, the velcro for attachment of a filter 30 is coupled with and formed on the mask guide 10 by a one-stop injection molding process, which provides an effect of reducing manufacturing time.

The replaceable filter 40 is formed to be attached to and removed from the first type filter insertion portion 20a within the mask guide 10. Here, attachment and removal of the replaceable filter 40 is performed by using the velcro for attachment of a filter 30.

Meanwhile, the replaceable filter 40 provides a replaceable structure of the velcro inserting type universal synthetic resin mask with a replaceable filter 1a 25 consisting of the mask guide 10 and the first type filter insertion portion 20a, thereby enabling the mask to be reused after a long time storage and increasing a hygiene level of the filter by enabling insertion and replacement of the filter.

FIG. 2 is a diagram illustrating a velcro inserting type universal synthetic resin mask with a replaceable filter 1b which is formed as a second type according to an embodiment of the present invention. When referring to FIG. 2, the velcro inserting type universal synthetic resin mask with a replaceable filter 1b formed as the second type has the same configuration as the velcro inserting type universal synthetic resin mask with a replaceable filter 1a formed as the first type shown in FIG. 1 except in that, the first type filter insertion portion 20a of the velcro inserting type universal synthetic resin mask with a replaceable filter 1a is varied to the shape of a second type filter insertion portion 20b.

Here, the second type filter insertion portion 20b is shown as a set of straight bar shapes which are arranged in a traverse direction. As shown in FIG. 2, it is preferred that the bars are formed to be apart from each other by a uniform spacing.

Meanwhile, manufacturing processes, features, and advantages of the velcro inserting type universal synthetic resin mask with a replaceable filter 1b, 1c, 10 1d, 1e, 1f formed as the second type as well as the third to sixth type as in the following, as well as the method of attaching and removing the replaceable filter 40 are the same as those for the velcro inserting type universal synthetic resin mask with a replaceable filter 1a formed as the first type and, therefore, duplicate explanations will be omitted in the following.

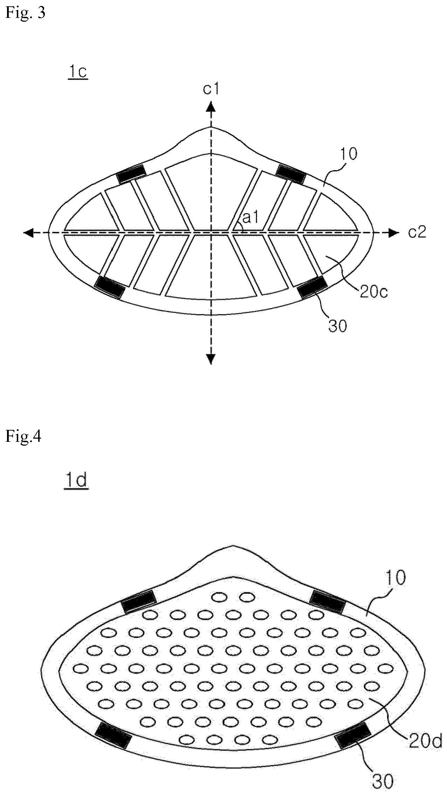

FIG. 3 is a diagram illustrating a velcro inserting type universal synthetic resin mask with a replaceable filter 1c which is formed as a third type according to an embodiment of the present invention. When referring to FIG. 3, the velcro inserting type universal synthetic resin mask with a replaceable filter 1c formed as the third type has the same configuration as the velcro inserting type universal synthetic resin mask with a replaceable filter 1a formed as the first type shown in FIG. 1 except in that, the first type filter insertion portion 20a of the velcro inserting type universal synthetic resin mask with a replaceable filter 1a is varied to the shape of a third type filter insertion portion 20c.

Here, the third type filter insertion portion 20c is shown to be formed in a vein pattern of a leaf in both directions from a center line c1 in the length direction.

In this case, six straight line shapes are formed upwards and downwards, respectively, with a preset angle a1 from a center line c2 in a horizontal direction, and, when these straight line shapes are formed, they are formed to be bilaterally symmetrical with respect to a center line c1 in a length direction. Here the supporting force with respect to the replaceable filter 40 will be maximized when the preset angle a1 is set at 80-82°.

FIG. 4 is a diagram illustrating a velcro inserting type universal synthetic resin mask with a replaceable filter 1d which is formed as a fourth type according to an embodiment of the present invention.

When referring to FIG. 4, the velcro inserting type universal synthetic resin mask with a replaceable filter 1d formed as the fourth type has the same configuration as the velcro inserting type universal synthetic resin mask with a replaceable filter 1a formed as the first type shown in FIG. 1 except in that, the first type filter insertion portion 20a of the velcro inserting type universal synthetic resin mask with a replaceable filter 1a is varied to the shape of a fourth type filter insertion portion 20d.

Here, the fourth type filter insertion portion 20d is formed such that grid patterned elliptic holes are arranged in an inner circumferential surface of the mask guide 10.

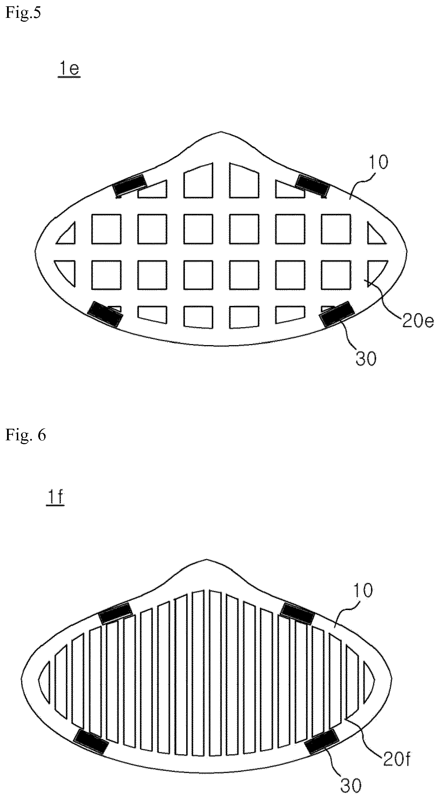

FIG. 5 is a diagram illustrating a velcro inserting type universal synthetic resin mask with a replaceable filter 1e which is formed as a fifth type according to an embodiment of the present invention. When referring to FIG. 5, the velcro inserting type universal synthetic resin mask with a replaceable filter 1e formed as the fifth type has the same configuration as the velcro inserting type universal synthetic resin mask with a replaceable filter 1a formed as the first type shown in FIG. 1 except in that, the first type filter insertion portion 20a of the velcro inserting type universal synthetic resin mask with a replaceable filter 1a is varied to the shape of a fifth type filter insertion portion 20e.

Here, the fifth type filter insertion portion 20e is formed in a shape where grid patterned rectangular holes which are bigger than the first type filter insertion portion 20a are arranged in an inner circumferential surface of the mask guide 10. Here, as shown in FIG. 5, triangular shaped or trapezoidal shaped holes can be arranged in a region adjacent to the mask guide 10 due to the shape of the inner surface of the mask guide 10.

FIG. 6 is a diagram illustrating a velcro inserting type universal synthetic resin mask with a replaceable filter 1f which is formed as a sixth type according to an embodiment of the present invention. When referring to FIG. 6, the velcro inserting type universal synthetic resin mask with a replaceable filter 1f formed as the sixth type has the same configuration as the velcro inserting type universal synthetic resin mask with a replaceable filter 1a formed as the first type shown in FIG. 1 except in that, the first type filter insertion portion 20a of the velcro inserting type universal synthetic resin mask with a replaceable filter 1a is varied to the shape of a sixth type filter insertion portion 20f.

Here, the sixth type filter insertion portion 20e is shown as a set of straight bar shapes which are arranged in a longitudinal direction. As shown in FIG. 6, it is preferred that the bars in the longitudinal direction are formed to be apart from each other by a uniform spacing.

FIGs. 7 and 8 are diagrams illustrating an injection molding apparatus for the velcro inserting type universal synthetic resin mask with a replaceable filter according to an embodiment of the present invention. At first, FIG. 7 illustrates a lower mold 100a of the insertion molding apparatus for the velcro inserting type universal synthetic resin mask with a replaceable filter, while FIG. 8 is a diagram illustrating an upper mold 100b of the insertion molding apparatus for the velcro inserting type universal synthetic resin mask with a replaceable filter.

The lower mold 100a includes a lower mask guide forming portion 110a and a velcro entity for attachment of a filter forming portion 111a. The lower mask guide forming portion 110a is engraved to form a lower surface of the mask guide 10 as described in the above, and separately includes four velcro entity for attachment of a filter forming portions 111a, on which the velcro for attachment of a filter is placed, at the lower surface of the mask guide 10 in top-down and bilateral symmetry.

Meanwhile, although not shown in the figure, it is preferred that along with an A area where the lower mask guide forming portion 110a of the lower mold 100a is formed, there is provided a B area, where the shapes of the first to sixth types of filter insertion portion 20a-20e as explained in the above are engraved, inside the lower mask guide forming portion 110a.

The upper mold 100b includes an upper mask guide forming portion 110b and a velcro entity insertion hole forming portion 111b.

The upper mask guide forming portion 110b is engraved to form an upper surface of the mask guide 10 as described in the above, and separately includes four velcro entity insertion hole forming portions 111b, on which the velcro for attachment of a filter 30 is placed, at the lower surface of the mask guide 10 in top-down and bilateral symmetry. Here each of the velcro entity insertion hole forming portions 111b is preferably formed as four bulging needles.

Meanwhile, although not shown in the figure, it is preferred that along with an A area where the upper mask guide forming portion 110b of the upper mold 100b is formed, there is provided a B area, where the shapes of the first to sixth types of filter insertion portion 20a-20e as explained in the above are engraved, inside the upper mask guide forming portion 110b.

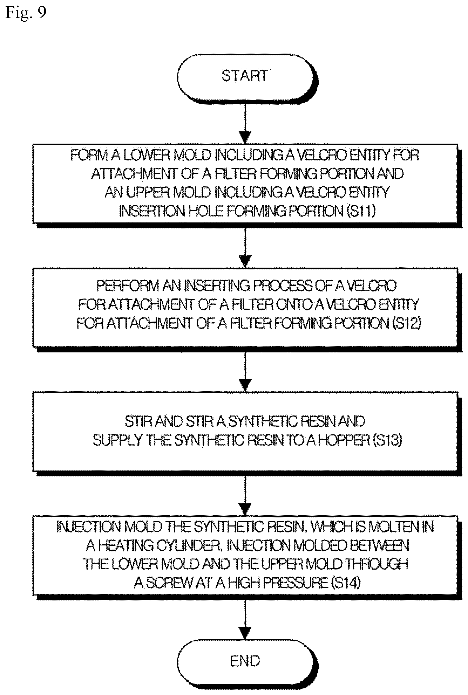

FIG. 9 is a flow chart illustrating a method of manufacturing the velcro inserting type universal synthetic resin mask with a replaceable filter according to an embodiment of the present invention. When referring to FIG. 9, a lower mold 100a including a velcro entity for attachment of a filter forming portion 111a and an upper mold 100b including a velcro entity insertion hole forming portion 111b are formed (S11).

After S11, an inserting process of a velcro for attachment of a filter 30 onto a velcro entity for attachment of a filter forming portion 111a of the lower mold 100a is performed (S12).

After S12, a synthetic resin which is used to form a mask guide 10 as well as the first to sixth type filter insertion portions 20a-20f are stirred and supplied to 20 a hopper (S13).

After step S13, the synthetic resin, which is molten in a heating cylinder, is injection molded between the lower mold 100a and the upper mold 100b through a screw at a high pressure, such that the manufacturing process of the velcro inserting type universal synthetic resin mask with a replaceable filter is completed (S14).

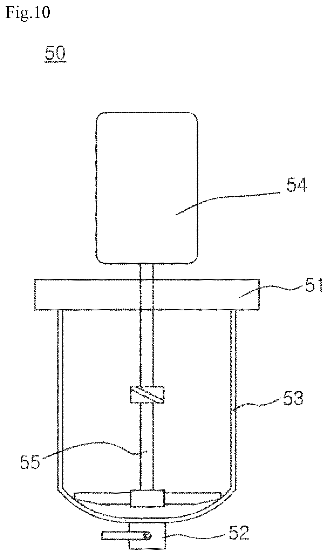

Meanwhile, although not shown in FIG. 9, during S13 in which the synthetic resin is stirred and supplied to the hopper, liquid functional additives such as loess, ceramic, charcoal, etc. can be uniformly mixed with the synthetic resin and to be injected. In this case, a first stirrer for stirring the synthetic resin and a second stirrer, which is formed downstream of the first stirrer and stirs the synthetic resin with the functional additive, can be formed. Structures 50 of the first stirrer and the second stirrer can be the same as the structure shown in FIG. 10. That is, the structure includes a stirring tank 53 having an opened top portion covered enclosed with a cover 51 placed thereon and a bottom portion with a discharge hole 52 formed therein, a driving motor 54 which is provided on the cover 51 of the stirring tank 53 and has a rotation shaft penetrating the cover 51, and a stirring vane 55 which is spline-connected with the rotation shaft of the driving motor 54 which penetrates the cover 51 and rotates.

### NUMERICAL SYMBOLS

1a to 1f: velcro inserting type universal synthetic resin masks with a replaceable filter formed as first to sixth types
10: mask guide 20
20a to 20f: first to sixth type filter insertion portions
30: velcro for attachment of a filter
40: replaceable filter
100a: lower mold
110a: lower mask guide forming portion 25
111a: velcro entity for attachment of a filter forming portion
100b: upper mold
110b: upper mask guide forming portion
111b: velcro entity insertion hole forming portion

## Claims

1. A velcro inserting type universal synthetic resin mask configured to receive a replaceable filter (40) comprising:
a mask guide (10) with a rim-like shape which supports a filter insertion portion (20a-20f) therein and is formed of a synthetic resin by an injection molding process using an upper mold (100b) and a lower mold (100a) along with the filter insertion portion; and
a velcro (30) for attachment of a filter,
**characterized in that** said velcro (30) for attachment of a filter is placed at a front portion of a velcro entity for attachment of a filter forming portion (111a) of the lower mold (100a) during the injection molding process for the mask guide and the filter insertion portion and formed on the mask guide when inserted such that the velcro for attachment of a filter is fixed through a velcro entity insertion hole forming portions (111b) of the upper mold (100b).

2. The mask of claim 1, further comprising a replaceable filter (40) which is formed to be attached to and removed from the filter insertion portion (20a-20f) within the mask guide (10).

3. The mask of claim 1, **characterized in that** the filter insertion portion is formed in a shape where grid patterned rectangular holes (20a) are arranged on an inner circumferential surface of the mask guide.

4. The mask of claim 1, **characterized in that** the filter insertion portion is formed as a set of straight bar shapes (20b) which are arranged in a traverse direction or a longitudinal direction.

5. The mask of claim 1, **characterized in that** in the filter insertion portion, six straight line shapes are formed upwards and downwards, respectively, with a preset angle (a1) from a center line (c2) in a horizontal direction, and, when the straight line shapes are formed, they are formed to be bilaterally symmetrical with respect to a center line (c1) in a length direction.

6. The mask of claim 1, **characterized in that** the filter insertion portion is formed in a shape where grid patterned elliptical holes (20d) are arranged on an inner circumferential surface of the mask guide.

7. An injection molding apparatus for a velcro inserting type universal synthetic resin mask with a replaceable filter comprising :
a lower mold (100a) which is engraved to form a lower side of a mask guide (10) which constitutes the velcro inserting type universal synthetic resin mask with a replaceable filter (40), wherein the lower mold includes a lower mask guide forming portion (110a) including four separate velcro entity for attachment of a filter forming portions (111a) for placing a velcro (30) for attachment of a filter on a lower surface of the mask guide, wherein the velcro entity for attachment of a filter forming portions (111a) are arranged in top-down and bilateral symmetry; and
an upper mold (100b) which is engraved to form an upper side of the mask guide, wherein the upper mold includes an upper mask guide forming portion (110b) including four separate velcro entity insertion hole forming portions (111b) for fixing the velcro for attachment of a filter on a lower surface of the mask guide, wherein the velcro entity insertion hole forming portions are arranged in top-down and bilateral symmetry.

8. The injection molding apparatus of claim 7, wherein each of the velcro entity insertion hole forming portions consists of four bulging needles.

9. The injection molding apparatus of claim 7, further comprising:
first and second stirrers for stirring a synthetic resin for forming the mask guide and the filter insertion portion and, a hopper for mixing and stirring the synthetic resin with liquid functional additives uniformly such that they are supplied to the hopper together, respectively, wherein the first stirrer stirs the synthetic resin, and wherein the second stirrer is formed downstream of the first stirrer to stir the synthetic resin with the functional additives and to supply the stirred result to the hopper.

10. The injection molding apparatus of claim 9, wherein each of the first and second stirrers comprises:
a stirring tank (53) with an opened top portion, wherein a cover (51) is provided to enclose the opened top portion and a discharge hole (52) is formed on a bottom portion of the stirring tank;
a driving motor (54) which is provided on the cover of the stirring tank, wherein a rotation shaft of the driving motor penetrates the cover; and
a stirring vane (55) which is spline-coupled with the rotation shaft of the driving motor, which penetrates the cover, and rotates.

11. A method of manufacturing a velcro inserting type universal synthetic resin mask with a replaceable filter comprising:
a first step in which a lower mold (100a) including a velcro entity for attachment of a filter forming portion (111a) and an upper mold (100b) including a velcro entity insertion hole forming portion (111b) are formed;
a second step in which inserting of the velcro (30) for attachment of a filter is performed on the velcro entity for attachment of a filter forming portion (111a) of the lower mold (100a), by placing it at a front portion of said velcro entity for attachment of a filter forming portion (111a);
a third step in which a synthetic resin for forming a mask guide (10) and a filter insertion portion (20a-20f) is stirred and supplied to a hopper; and
a fourth step in which a high pressure injection process of the synthetic resin, which is molted in a heating cylinder, is performed between the lower mold (100a) and the upper mold (100b) by way of a screw such that manufacturing of the velcro inserting type universal synthetic resin mask with a replaceable filter is completed.

12. The method of claim 11, wherein, when the synthetic resin is stirred and supplied to the hopper, liquid functional additives are uniformly mixed with the synthetic resin to be inserted.

## Patentansprüche

1. Velcro-Allzweck-Einsatzsynthetikharzmaske, die zum Aufnehmen eines auswechselbaren Filters (40) ausgelegt ist, umfassend:
eine Maskenführung (10) mit einer felgenähnlichen Form, die einen Filtereinsatzteil (20a-20f) darin stützt und aus einem synthetischen Harz durch einen Spritzgießprozess unter Verwendung einer oberen Gießform (100b) und einer unteren Gießform (100a) zusammen mit dem Filtereinsatzteil gebildet ist; und
ein Klettband (Velcro) (30) für die Befestigung eines Filters,
**dadurch gekennzeichnet, dass** das Velcro (30) zur Befestigung eines Filters an einem vorderen Teil einer Velcro-Einheit zur Befestigung eines Filter-Bildungsteils (111a) der unteren Gießform (100a) während des Spritzgießprozesses für die Maskenführung und den Filtereinsatzteil platziert ist und auf der Maskenführung gebildet wird, wenn derart eingeführt, dass das Velcro zur Befestigung eines Filters durch ein Velcro-Einheits-Einführungsloch befestigt wird, das Teile (111b) der oberen Gießform (100b) bildet.

2. Maske nach Anspruch 1, die ferner ein austauschbares Filter (40) umfasst, das so geformt ist, dass es am Filtereinsatzteil (20a-20f) innerhalb der Maskenführung (10) befestigt und von demselben gelöst werden kann.

3. Maske nach Anspruch 1, **dadurch gekennzeichnet, dass** der Filtereinsatzteil in einer Form gebildet ist, wo gitterförmige rechteckige Löcher (20a) auf einer inneren Umfangsfläche der Maskenführung angeordnet sind.

4. Maske nach Anspruch 1, **dadurch gekennzeichnet, dass** der Filtereinsatzteil als ein Satz von geraden Stabformen (20b) gebildet ist, die in einer Querrichtung oder einer Längsrichtung angeordnet sind.

5. Maske nach Anspruch 1, **dadurch gekennzeichnet, dass** im Filtereinsatzteil sechs gerade Linienformen nach oben bzw. nach unten gebildet sind, mit einem voreingestellter Winkel (a1) von einer Mittellinie (c2) in einer horizontalen Richtung, und, wenn die geraden Linienformen gebildet werden, werden sie so geformt, dass sie bilateral symmetrisch zu einer Mittellinie (c1) in einer Längsrichtung sind.

6. Maske nach Anspruch 1, **dadurch gekennzeichnet, dass** der Filtereinsatzteil in einer Form gebildet ist, bei der gitterförmige elliptische Löcher (20d) auf einer inneren Umfangsfläche der Maskenführung angeordnet sind.

7. Spritzgießvorrichtung für eine Velcro-Allzweck-Einsatzsynthetikharzmaske mit einem austauschbaren Filter, umfassend:
eine untere Gießform (100a), die graviert ist, um eine untere Seite einer Maskenführung (10) zu bilden, die die Velcro-Allzweck-Einsatzsynthetikharzmaske mit einem austauschbaren Filter (40) darstellt, wobei die untere Gießform einen unteren Maskenführungs-Bildungsteil (110a) umfasst, der vier getrennte Velcro-Einheiten zur Befestigung eines Filters umfasst, das Teile (111a) zum Platzieren eines Velcros (30) zum Befestigen eines Filters auf einer unteren Fläche der Maskenführung bildet, wobei die Velcro-Einheit zur Befestigung eines Filters, das Teile (111a) bildet, die in einer Symmetrie oben-unten und in einer bilateralen Symmetrie angeordnet sind; und
eine obere Gießform (100b), die graviert ist, um eine Oberseite der Maskenführung zu bilden, wobei die obere Gießform einen oberen Maskenführungs-Bildungsteil (110b) umfasst, einschließlich vier separater Velcro-Einheits-Einführungsloch-Bildungsteile (111b) zum Befestigen des Velcros zur Befestigung eines Filters auf einer unteren Fläche der Maskenführung, wobei die Velcro-Einheits-Einführungsloch-Bildungsteile in einer Symmetrie oben-unten und in einer bilateralen Symmetrie angeordnet sind.

8. Spritzgießvorrichtung nach Anspruch 7, wobei jeder der Velcro-Einheits-Einführungsloch-Bildungsteile aus vier sich aufwölbenden Nadeln besteht.

9. Spritzgießvorrichtung nach Anspruch 7, ferner umfassend:
erste und zweite Rührer zum Rühren eines synthetischen Harzes zum Bilden der Maskenführung und des Filtereinsatzteils und, einen Fülltrichter zum gleichförmigen Mischen und zum Rühren des synthetischen Harzes mit flüssigen funktionellen Additiven gleichmäßig derart, dass sie dem Fülltrichter jeweils zusammen zugeführt werden, wobei der erste Rührer das Syntheseharz rührt, und wobei der zweite Rührer stromabwärts vom ersten Rührer gebildet ist, um das Syntheseharz mit den funktionellen Additiven zu rühren und das Rührergebnis dem Fülltrichter zuzuführen.

10. Spritzgießvorrichtung nach Anspruch 9, wobei jeder der ersten und zweiten Rührer umfasst:
einen Rührtank (53) mit einem offenen Oberteil, wobei eine Abdeckung (51) vorgesehen ist, um das offene Oberteil zu schließen, und ein Entleerungsloch (52) ist auf einem unteren Teil des Rührtanks gebildet;
einen Antriebsmotor (54), der auf der Abdeckung des Rührtanks vorgesehen ist, wobei eine Drehwelle des Antriebsmotors die Abdeckung durchdringt; und
einen Rührflügel (55), der durch einen Keil mit der Drehwelle des Antriebsmotors verbunden ist, die die Abdeckung durchdringt, und sich dreht.

11. Verfahren zum Herstellen einer Velcro-Allzweck-Einsatzsynthetikharzmaske mit einem austauschbaren Filter, umfassend:
einen ersten Schritt, bei dem eine untere Gießform (100a), die eine Velcro-Einheit zur Befestigung eines Filter-Bildungsteils (111a) umfasst, und eine obere Gießform (100b), die einen Velcro-Einheits-Einführungsloch-Bildungsteil (111b) umfasst, gebildet werden;
einen zweiten Schritt, bei dem das Einführen des Velcros (30) zum Befestigen eines Filters an der Velcro-Einheit zur Befestigung eines Filter-Bildungsteils (111a) der unteren Gießform (100a) ausgeführt wird, durch Platzieren an einem vorderen Teil der Velcro-Einheit zum Befestigen eines Filter-Bildungsteils (lila);
einen dritten Schritt, bei dem ein synthetisches Harz zum Bilden einer Maskenführung (10) und eines Filtereinsatzteils (20a-20f) gerührt wird und einem Fülltrichter zugeführt wird; und
einen vierten Schritt, bei dem ein Hochdruck-Spritzprozess des synthetischen Harzes, welches in einem Heizzylinder geschmolzen wird, zwischen der unteren Gießform (100a) und der oberen Gießform (100b) mittels einer Schraube derart ausgeführt wird, dass das Herstellen der Velcro-Allzweck-Einsatzsynthetikharzmaske mit einem austauschbaren Filter abgeschlossen wird.

12. Verfahren nach Anspruch 11, wobei, wenn das synthetische Harz gerührt und dem Fülltrichter zugeführt wird, flüssige funktionelle Additive gleichförmig mit dem einzufüllenden synthetischen Harz gemischt werden.

## Revendications

1. Masque en résine synthétique universel du type insert à velcro configuré pour recevoir un filtre remplaçable (40) comprenant :
un guide de masque (10) ayant une forme de collerette qui supporte une partie d'insertion de filtre (20a-20f) dans celui-ci et qui est formé d'une résine synthétique par un procédé de moulage par injection utilisant un moule supérieur (100b) et un moule inférieur (100a) conjointement avec la partie d'insertion de filtre ; et
un velcro (30) pour l'attachement d'un filtre,
**caractérisé en ce que** ledit velcro (30) pour l'attachement d'un filtre est placé au niveau d'une partie avant d'une entité de velcro pour l'attachement d'une partie de formation de filtre (111a) du moule inférieur (100a) durant le procédé de moulage par injection pour le guide de masque et la partie d'insertion de filtre et est formé sur le guide de masque lorsqu'il est inséré de façon que le velcro pour l'attachement d'un filtre soit fixé par l'intermédiaire d'une partie de formation de trous d'insertion d'entité de velcro (111b) du moule supérieur (100b).

2. Masque selon la revendication 1, comprenant en outre un filtre remplaçable (40) qui est formé de manière à être attaché à et retiré de la partie d'insertion de filtre (20a-20f) à l'intérieur du guide de masque (10).

3. Masque selon la revendication 1, **caractérisé en ce que** la partie d'insertion de filtre est formée sous une forme dans laquelle des trous rectangulaires en motif de grille (20a) sont agencés sur une surface circonférentielle intérieure du guide de masque.

4. Masque selon la revendication 1, **caractérisé en ce que** la partie d'insertion de filtre est formée comme un jeu de formes de barres droites (20b) qui sont agencées dans une direction transversale ou une direction longitudinale.

5. Masque selon la revendication 1, **caractérisé en ce que**, dans la partie d'insertion de filtre, six formes en ligne droite sont formées vers le haut et vers le bas, respectivement, avec un angle préétabli (a1) à partir d'une ligne centrale (c2) dans la direction horizontale, et, quand les formes en ligne droite sont formées, elles sont formées de manière à être bilatéralement symétriques par rapport à une ligne centrale (c1) dans la direction de la longueur.

6. Masque selon la revendication 1, **caractérisé en ce que** la partie d'insertion de filtre est formée sous une forme dans laquelle des trous elliptiques en motif de grille (20d) sont agencés sur une surface circonférentielle intérieure du guide de masque.

7. Dispositif de moulage par injection pour un masque en résine synthétique universel du type insert à velcro avec un filtre remplaçable comprenant :
un moule inférieur (100a) qui est gravé de manière à former un côté intérieur d'un guide de masque (10) qui constitue le masque en résine synthétique universel du type insert à velcro avec un filtre remplaçable (40), dans lequel le moule inférieur comprend une partie de formation de guide de masque inférieure (110a) comprenant quatre entités de velcro séparées pour l'attachement d'une partie de formation de filtre (111a) pour placer un velcro (30) pour l'attachement d'un filtre sur une surface inférieure du guide de masque, dans lequel l'entité de velcro pour l'attachement d'une partie de formation de filtre (111a) est agencée en symétrie haut-bas et bilatérale ; et
un moule supérieur (110b) qui est gravé de manière à former un côté supérieur du guide de masque, dans lequel le moule supérieur comprend une partie de formation de guide de masque supérieure (110b) comprenant quatre parties de formation de trous d'insertion d'entité de velcro séparées (111b) pour fixer le velcro pour l'attachement d'un filtre sur une surface inférieure du guide de masque, dans lequel les parties de formation de trous d'insertion d'entité de velcro sont agencées en symétrie haut-bas et bilatérale.

8. Dispositif de moulage par injection selon la revendication 7, dans lequel chacune des parties de formation de trous d'insertion d'entité de velcro est constituée de quatre aiguilles en renflement.

9. Dispositif de moulage par injection selon la revendication 7, comprenant en outre :
des premier et deuxième agitateurs pour agiter une résine synthétique pour former le guide de masque et la partie d'insertion de filtre et, une trémie pour mélanger et agiter la résine synthétique avec des additifs fonctionnels liquides uniformément de façon qu'ils soient fournis à la trémie ensemble, respectivement, dans lequel le premier agitateur agite la résine synthétique, et dans lequel le deuxième agitateur est formé en aval du premier agitateur pour agiter la résine synthétique avec les additifs fonctionnels et pour fournir le résultat agité à la trémie.

10. Dispositif de moulage par injection selon la revendication 9, dans lequel chacun des premier et deuxième agitateurs comprend :
un réservoir d'agitation (53) avec une partie supérieure ouverte, dans lequel un couvercle (51) est prévu pour fermer la partie supérieure ouverte et un trou de décharge (52) est formé sur une partie de fond du réservoir d'agitation ;
un moteur d'entraînement (54) qui est disposé sur le couvercle du réservoir d'agitation, dans lequel un arbre de rotation du moteur d'entraînement pénètre dans le couvercle ; et
une aube d'agitation (55) qui est en accouplement cannelé avec l'arbre de rotation du moteur d'entraînement, qui pénètre dans le couvercle, et tourne.

11. Procédé de fabrication d'un masque en résine synthétique universel du type insert à velcro avec un filtre remplaçable comprenant :
une première étape dans laquelle un moule inférieur (100a) comprenant une entité de velcro pour l'attachement d'une partie de formation de filtre (111a) et un moule supérieur (100b) comprenant une partie de formation de trous d'insertion d'entité de velcro (111b) sont formés ;
une deuxième étape dans laquelle l'insertion du velcro (30) pour l'attachement de filtre est effectuée sur l'entité de velcro pour l'attachement d'une partie de formation de filtre (111a) du moule inférieur (100a), par son placement au niveau d'une partie avant de ladite entité de velcro pour l'attachement d'une partie de formation de filtre (111a) ;
une troisième étape dans laquelle une résine synthétique pour former un guide de masque (10) et une partie d'insertion de filtre (20a-20f) est agitée et fournie à une trémie ; et
une quatrième étape dans laquelle un procédé d'injection sous pression élevée de la résine synthétique, qui est fondue dans un cylindre chauffant, est effectué entre le moule inférieur (100a) et le moule supérieur (100b) au moyen d'une vis de façon que la fabrication du masque en résine synthétique universel du type insert à velcro avec un filtre remplaçable soit achevée.

12. Procédé selon la revendication 11, dans lequel, quand la résine synthétique est agitée et fournie à la trémie, des additifs fonctionnels liquides sont uniformément mélangés avec la résine synthétique devant être insérée.
